# EUROPEAN PATENT APPLICATION

(11) **EP 0 761 104 A1**
(43) Date of publication of application: **12.03.1997**
(21) Application number: 96107120.6
(22) Date of filing: 06.05.1996
(51) Int. Cl.: A23L 1/22, A23L 1/24

(54) **Dressing type seasoning composition containing encapsulated flavour of wasabi**

(30) Priority: 29.08.1995 JP 243632/95
(71) Applicant: RIKEN VITAMIN CO., LTD., Chiyoda-ku, Tokyo (JP)
(72) Inventor: Nishimoto, Seiji, Soka-shi, Saitama-ken (JP); Iwase, Akio, Kasukabe-shi, Saitama-ken (JP); Hasegawa, Hiroyasu, Edogawa-ku, Tokyo (JP)
(74) Representative: TER MEER - MÜLLER - STEINMEISTER & PARTNER

(57) **Abstract**

Disclosed is a dressing type seasoning using microcapsules with the fragrance of wasabi sealed therein, and a method of producing the same. A wasabi-incorporated dressing type seasoning rich in the preservability, which gives out the fragrance of wasabi when keeping the dressing in mouth, can be provided.

## Description

### BACKGROUND OF THE INVENTION

The present invention relates to a dressing type seasoning composition containing microcapsules with fragrant components of wasabi sealed therein, which has been made to have improved flavor of food and to be endurable to the distribution at ambient temperature.

The dressings include salad dressing, French dressing, mayonnaise, etc. and additionally Italian, Southern Irish and Japanese type dressings. According to the Japan Agricultural Standards, it is designated that, among the semisolid dressings, mayonnaise points to one that uses yolk or overall egg and does not use any raw material other than essential raw materials, i.e. yolk, glair, starch paste, salt, sugars, spice, emulsifier, emulsion stabilizer, synthetic paste, chemical seasoning and sour, and, among the emulsified liquid dressings and separated liquid dressings, French dressing points to one that uses pepper or paprika and does not use any raw material other than essential raw materials, i.e. yolk, glair, salt, sugars, processed tomato, pepper, emulsifier, emulsion stabilizer, synthetic paste, chemical seasoning, sour and antioxidant.

In recent years, with the diversified dietary culture, a dressing type seasoning without edible oil and fat is utilized, the property of which has become much different from one with high viscosity to liquid with low viscosity. For instance, the mainstream of salad in Japan was composed of vegetable prime materials such as lettuce, tomato and cabbage, but, with the progress of diversified dietary culture, a wide range of food materials like seaweeds such as wakame, fish and fruit have become to be used also for prime materials. For this reason, many variations using a variety of peppers and ingredients are being developed for the commercial dressings.

In the diversification of dressings and dressing type seasonings corresponding to the diversified prime materials for foods, the pepper accounts for one of them. Peppers include rosemary, clove, paprika, etc. in most cases, and use of wasabi is less often among the peppers.

This is considered because of that, when using for the dressing etc., probably the fragrant components of wasabi, so-called the top flavor of wasabi (fragrance peculiar to wasabi that stimulates the nose immediately on eating) ends up to be lost, reduced, and so forth, making it difficult to maintain this flavor over a long term.

Moreover, the main components of the fragrance and the pungent taste of wasabi are mustard seed oils (isocyanates). As well-known, these components are reported to be highly volatile and decomposable with water, thus unstable. For stabilizing these unstable fragrant components of wasabi, there is a method of forming inclusion with cyclodextrin etc., but the flavor-holding effect is not sufficient in the liquid product containing water compared with powder product.

As a result of diligent investigations in view of such situation, it has been found that, if wasabi odorant, wasabi extract or their mixture is sealed into an edible gel particle (microcapsule), then the top flavor peculiar to wasabi can be maintained over a long term despite the dressing and dressing type seasoning system containing much moisture.

### SUMMARY OF THE INVENTION

The invention provides a dressing type seasoning composition containing microcapsules with fragrant components of wasabi sealed therein, and a method of producing the dressing type seasoning suing microcapsules with fragrant components of wasabi sealed therein.

### DETAILED DESCRIPTION OF THE INVENTION

The fragrant components of wasabi referred to so in the invention indicate wasabi odorant, isocyanate, wasabi extract, ground natural wasabi and mixtures of two kinds or more thereof, which have the fragrance of wasabi.

Moreover, the particles (microcapsules) with fragrant components of wasabi sealed therein can be obtained by making the particles (microcapsules) from a paste containing edible gelling agents such as sodium alginate and pectin and then collecting the particles in aqueous solution of calcium chloride to harden them.

For the formers of particles and the stability aids, polysaccharides and proteins with high-molecular structure can also be used. They include, for example, carrageenan, locust bean gum, guar gum, geran gum, gelatin, xanthane gum, pharseleran and so forth. Moreover, the moisture in particle can be adjusted by cold blast drying etc., but the adjustment of moisture is also possible by controlling the amount of water charging on the production of particles. When using the particles (microcapsules) containing the fragrant components of wasabi thus produced in a creamy dressing etc., they disperse uniformly due to the specific density of microcapsule and the viscosity of dressing, and further it is possible to produce the microcapsules that give little feeling of wrongness on eating as particles.

Moreover, when using in a dressing of oily layer/aqueous layer separation type, a dressing of little oil content type, etc. the particles precipitate or float usually in the aqueous layer during preserving period, but the uniform dispersion is possible through the adjustment of the specific gravity of microcapsule. Yet, the top flavor being the fragrant components of wasabi is maintained over a long term.

In following, the invention will be illustrated based on the examples.

### Example 1

### Method of producing the particles with fragrant components of wasabi incorporated therein

A paste was prepared by dissolving 6 g of sodium alginate, 1.5 g of locust bean gum and 10.5 g of sugar into 200 g of water of 60 °C under stirring. Then, 90 g of fragrant components of wasabi were obtained by uniformly mixing wasabi odorant and wasabi extract. Next, the paste for capsule substrate and the fragrant components of wasabi were converted to microcapsules through a two-fluid nozzle. The particles formed were collected in 3 % solution of calcium chloride to harden the particles. Thereafter, by filtration and washing, the particles (microcapsules) containing the fragrant components of wasabi were obtained.

The composition of particle (microcapsule) containing the fragrant components of wasabi obtained was 65 % moisture, 30 % fragrant components (odorant and extract) of wasabi and 6 % particle (microcapsule) substrate. Moreover, the particle size distribution was 400 to 1700 µ and the yield was 78 % based on the charged weight (308 g).

### Example 2

With a charging recipe of 4 g of pectin, 4 g of xanthane gum, 32 g of sugar, 310 g of water and 80 g of wasabi odorant, particles (microcapsules) containing wasabi odorant were obtained similarly to Example 1.

The composition of particle (microcapsule) containing wasabi odorant obtained was 70 % moisture, 20 % wasabi odorant and 10 % particle (microcapsule) substrate. The particle size distribution was 400 to 1700 µ and the yield of particles was 89 % based on the charged weight (430 g).

### Example 3

A creamy nonoil dressing was made with a recipe in Table 1, and the stability test of the flavor of this dressing was conducted, the results of which are shown in Table 2.

### Example 4

An edible oil-containing creamy dressing was made with a recipe in Table 1, and, similarly, the stability test was conducted, the results of which are shown in Table 3.

### Example 5

A liquid nonoil dressing was made with a recipe in Table 1, and similarly, the stability test was conducted, the results of which are shown in Table 4.

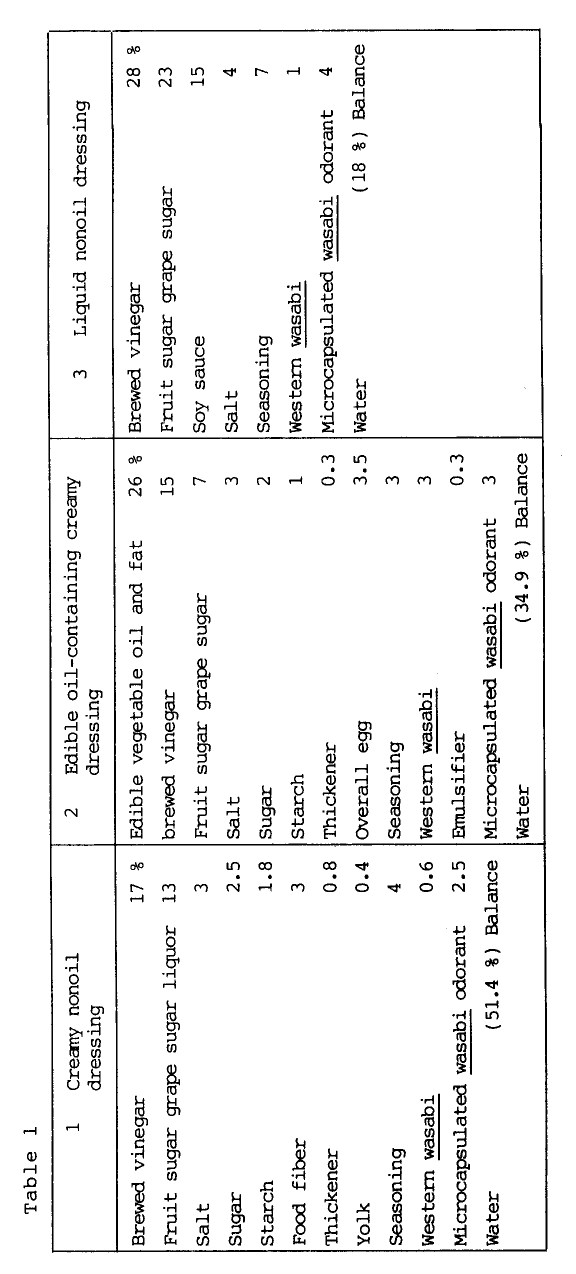

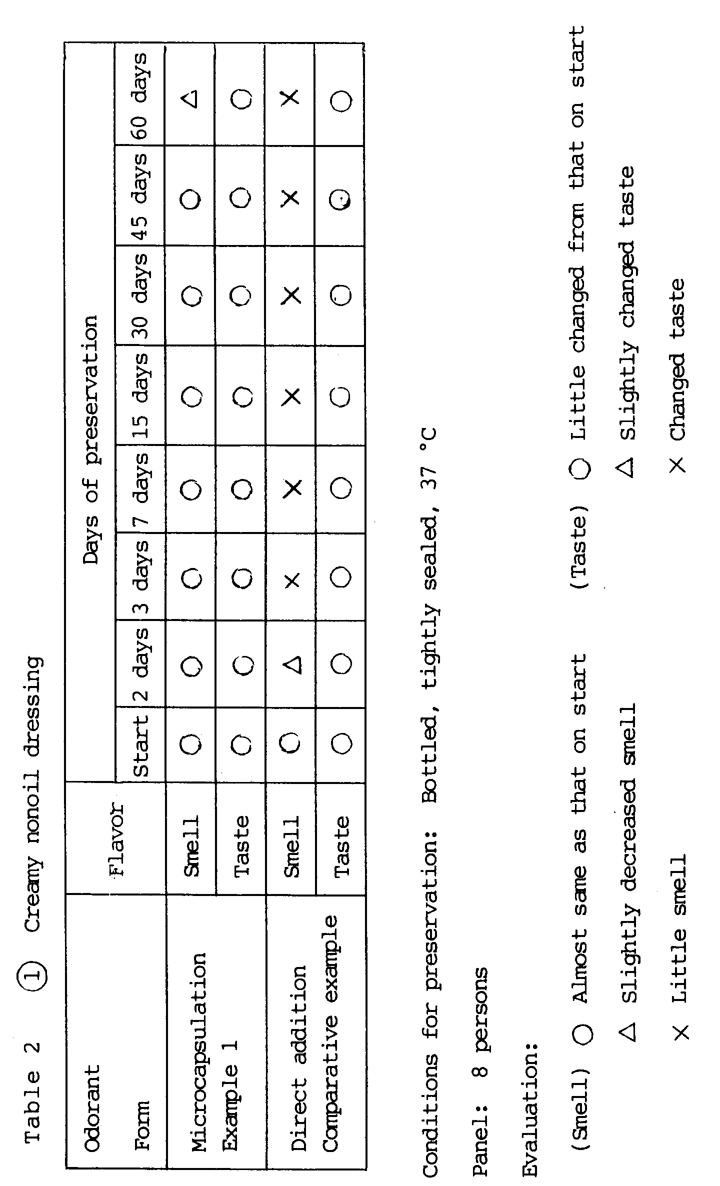

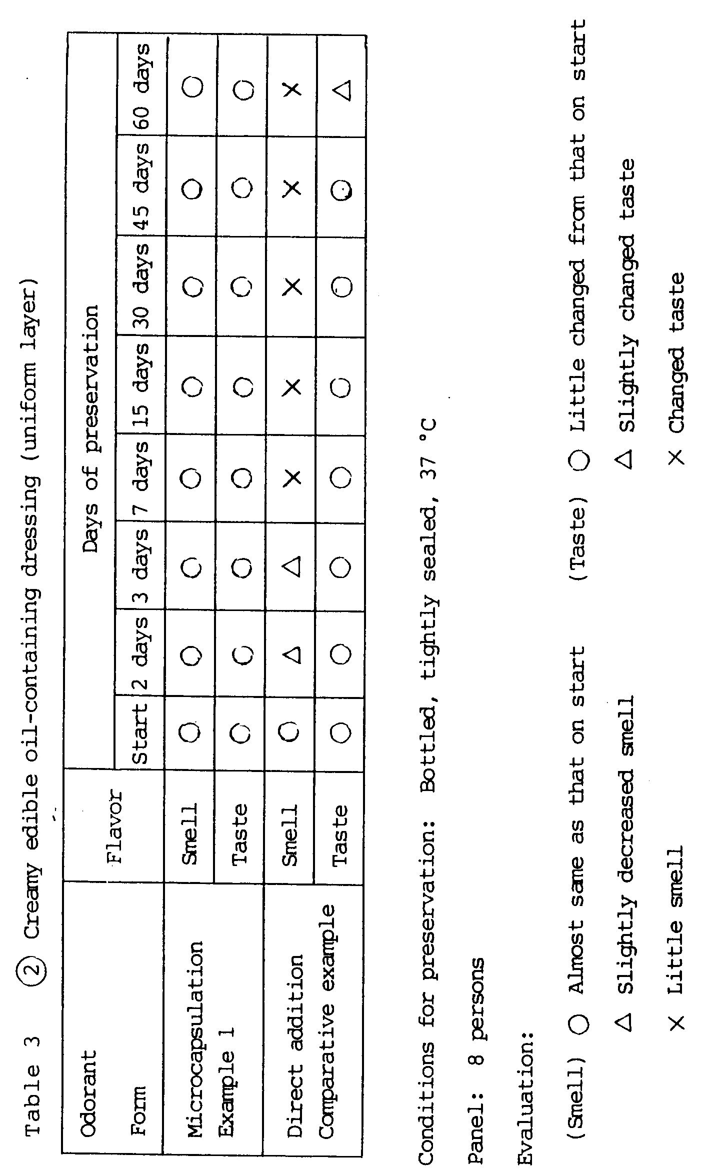

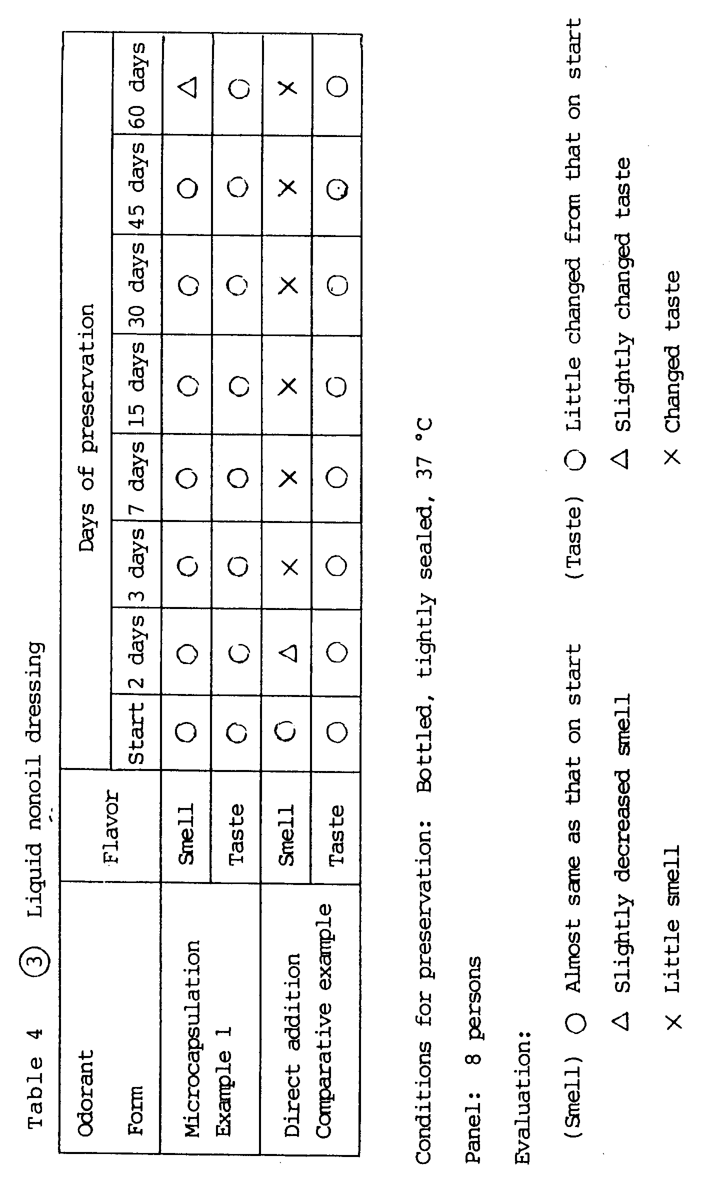

In accordance with the invention, by allowing to contain particles (microcapsules) with the fragrant components of wasabi sealed therein in dressing and dressing type seasoning, the dressing with high smell and flavor can be stabilized over a long term. From the features of particle, the fragrance of wasabi is given out, when keeping the dressing in mouth. It is possible to make the particles dispersible uniformly into the dressing by changing the amount of water in particle and edible gelling agent.

## Claims

1. A dressing type seasoning composition containing microcapsules with the fragrant components of wasabi sealed therein.

2. A method of producing the dressing type seasoning using microcapsules with the fragrant components of wasabi sealed therein.
